# EUROPÄISCHE PATENTANMELDUNG

(11) **EP 4 817 997 A1**
(43) Veröffentlichungstag der Anmeldung: **07.10.2026**
(21) Anmeldenummer: 26170162.7
(22) Anmeldetag: 01.04.2026
(51) Int. Cl.: B62D 5/04

(54) **VERFAHREN ZUM BETRIEB EINES LENKSYSTEMS UND LENKSYSTEM**

(30) Priorität: 01.04.2025 DE 102025112663
(71) Anmelder: Volkswagen Aktiengesellschaft, 38440 Wolfsburg (DE)
(72) Erfinder: Stoltze, Lars, 38440 Wolfsburg (DE); Atzert, Benjamin, 38440 Wolfsburg (DE); Reinbold, Felix, 38440 Wolfsburg (DE); Cornely, Sebastian, 38440 Wolfsburg (DE); Bartels, Alexander, 38440 Wolfsburg (DE); Rüger, Tobias, 38440 Wolfsburg (DE); Frohn, Christian, 38440 Wolfsburg (DE)

(57) **Zusammenfassung**

Die Erfindung betrifft ein Verfahren zum Betrieb eines Lenksystems sowie ein Lenksystem (1), wobei das Lenksystem (1) zumindest einen Radaktuator (2) zur Erzeugung einer Antriebskraft für eine Lenkbewegung, einen Positionssensor (8) zum Erfassen einer Absolutposition eines beweglichen Elements (3) des Radaktuators (2) sowie eine Einrichtung zur Bereitstellung einer Stellgröße für den Radaktuator (2) umfasst, wobei das Verfahren folgende Schritte umfasst:
a) Prüfen, ob durch den Positionssensor (8) zuverlässig eine Absolutposition erfasst werden kann,
b) Aktivieren eines Notlaufbetriebsmodus aus einer Menge von Notlaufbetriebsmodi, wenn die Absolutposition nicht zuverlässig erfasst werden kann, wobei die Menge von Notlaufbetriebsmodi einen Relativpositionsmodus, in dem die Stellgröße in Abhängigkeit einer Soll-Positionsänderung bestimmt wird, einen Gierbewegungsmodus, in dem die Stellgröße in Abhängigkeit einer Soll-Gierbewegung bestimmt wird, und einen Kraftmodus, in dem die Stellgröße in Abhängigkeit einer Soll-Kraft bestimmt wird, umfasst.

## Beschreibung

Die Erfindung betrifft ein Verfahren zum Betrieb eines Lenksystems sowie ein Lenksystem.

In modernen Fahrzeugen werden so genannte Steer-by-Wire-Systeme (SbW-Systeme) verwendet, bei denen es keine mechanische Verbindung zwischen Lenkrad und gelenkten Rädern mehr gibt. Stattdessen bedient ein Fahrzeugführer in der Regel eine Lenkhandhabe, wobei ein Aktuator ein Feedback-Moment bereitstellt und gegebenenfalls auch eine Führung des Fahrzeugführers durchführt. Mit Hilfe dieses Feedbackaktuators bzw. der darin integrierten Sensorik kann auch ein Lenkwunsch des Fahrzeugführers erfasst werden. Alternativ zu einem Lenkwunsch durch den Fahrzeugführer kann in modernen Fahrzeugen ein solcher Lenkwunsch auch vermehrt über Assistenzsysteme bzw. autonom fahrende Systeme übernommen werden (z.B. bei Einparkautomatiken oder Stau-/Autobahnassistenten bzw. Autobahnpilot).

Die Umsetzung des Lenkwunsches erfolgt in solchen Systemen oftmals mit einem Radaktuator, der die notwendigen Kräfte/Momente für eine Lenkbewegung der Räder (oder ein Teil davon) erzeugt. Eine übliche Umsetzung ist, dass eine vom Radaktuator erzeugte Aktorgröße in Abhängigkeit einer Soll-Position bestimmt wird. Insbesondere kann der Lenkwunsch als Soll-Position bereitgestellt werden oder aus dem Lenkwunsch die Soll-Position bestimmt werden. Üblicherweise wird die Stellgröße im Rahmen einer Positionsregelung erzeugt, wobei die Soll-Position als Führungsgröße vorgegeben wird. Ebenfalls wird eine Ist-Position mit einem Positionssensor erfasst und dann die Regelabweichung als Differenz aus Soll-Position und Ist-Position als Eingangsgröße für einen Regler bestimmt, der dann wiederum die Stellgröße als Eingangssignal für den Radaktuator bereitstellt, der dann in Abhängigkeit dieser Stellgröße die Aktorgröße, z.B. eine Antriebskraft/ein Antriebsmoment, erzeugt.

Bei Ausfall des Radaktuators bzw. der für eine Umsetzung des Lenkwunsches notwendigen Teile des Radaktuators (z.B. bei Positionsregelung ein Ausfall der Positionssensorik) sind als Absicherung der Steer-by-Wire-Systeme bisher insbesondere Kupplungen verbreitet, die die mechanische Verbindung zwischen Lenkrad und gelenkten Rädern wieder herstellen. Sollte eine solche mechanische Rückfallebene nicht verbaut sein, so sind die Anforderungen gegen Ausfall an den Radaktuator (aber auch den Feedbackaktuator) extrem hoch. Dieses wird dann durch entsprechend ausfallsichere Bauteile und Redundanz der Bauteile erreicht. Bei Fahrzeugen, die teilautomatisiert fahren, bildet in der Regel der Fahrzeugführer die Absicherung. Er muss das Lenken übernehmen, wenn der Radaktuator (oder bei nicht-Steer-by-Wire-Systemen das Lenkgetriebe) nicht mehr den Lenkwunsch vom Assistenzsystem umsetzen kann. Dieses wird dem Fahrer dann deutlich signalisiert. Bis zur Übernahme muss der Radaktuator (Lenkgetriebe) weiterhin den Lenkwunsch vom Assistenzsystem sicher umsetzen. Dieses wird analog zum Steer-by-Wire-System dann durch entsprechend ausfallsichere Bauteile und Redundanz der Bauteile erreicht.

Die US 8,234,045 B2 offenbart Methoden und Systeme zur Abschwächung oder Beseitigung von Fehlermoduseffekten in SbW-Systemen.

Die DE 10 2022 209 604 A1 offenbart ein Sicherheitssystem zur Fahrzeugquerführung für ein Steer-by-Wire-Lenksystem eines Kraftfahrzeuges.

Die US 6,609,052 B2 offenbart ein Steer-by-Wire-Systeme und insbesondere eine Verwendung eines Drehmomentsensors zum Lenken eines Fahrzeugs, das ein Steer-by-Wire-System umfasst.

Die DE 10 2016 208 775 B4 offenbart ein Steer-by-Wire-System für ein Kraftfahrzeug.

Die US 2024/0140521 A1 offenbart ein System und Verfahren für einen ausfallsicheren Betrieb für Winkelsensoren in einem Steer-by-Wire (SbW)-System und insbesondere ein System und Verfahren zur Durchführung eines ausfallsicheren Betriebs für Winkelsensoren unter Verwendung eines oder mehrerer Motorpositionssensoren in dem SbW-System.

Die DE10 2019 131 838 A1 offenbart ein Antriebssystem für ein mehrrädriges Fahrzeug mit radselektiven Aktoren.

Die JP 5347499 B2 offenbart eine Fahrzeugsteuerungsvorrichtung und ein Fahrzeugsteuerungsverfahren zur Bereitstellung eines Hilfslenkwinkels für die Vorderräder und die Hinterräder, wenn ein Fahrer die Lenkung der Vorderräder eingibt.

Es stellt sich das technische Problem, ein Verfahren zum Betrieb eines Lenksystems sowie ein Lenksystem zu schaffen, die in einfach implementierbarer Weise eine Betriebssicherheit bei der Verwendung des Lenksystems erhöhen.

Die Lösung des technischen Problems ergibt sich durch die Gegenstände mit den Merkmalen der unabhängigen Ansprüche. Weitere vorteilhafte Ausgestaltungen der Erfindung ergeben sich aus den Unteransprüchen.

Vorgeschlagen wird ein Verfahren zum Betrieb eines Lenksystems.

Das Lenksystem ist insbesondere Bestandteile eines Fahrzeugs und dient zur Einstellung eines Radlenkwinkels von lenkbaren Rädern des Fahrzeugs. Das Lenksystem umfasst zumindest einen Radaktuator zur Erzeugung einer Antriebskraft für eine Lenkbewegung, einen Positionssensor zum Erfassen einer Absolutposition eines beweglichen Elements des Radaktuators sowie eine Einrichtung zur Bereitstellung einer Stellgröße für den Radaktuator. Der Positionssensor bezeichnet hierbei eine Einrichtung oder ein System zur Bestimmung einer Absolutposition. Neben der unmittelbaren Erfassung der Absolutposition kann diese Einrichtung bzw. das System auch eine Fusion von Ausgangssignalen mehreren Sensoren zur Bestimmung der Absolutposition oder ein Anlernen der Absolutpositionen unter Berücksichtigung von Indexmarken oder Endanschlägen durchführen.

Das Lenksystem kann somit insbesondere ein elektromechanisches Lenksystem sein. Der Radaktuator kann ein Elektromotor, z.B. ein Schritt- oder Servomotor, sein. Ein bewegliches Element des Radaktuators kann insbesondere eine linear oder rotatorisch angetriebene Welle des Radaktuators sein. Es kann über ein Getriebe mit dem lenkbaren Rad verbunden sein. Das Getriebe kann eine Zahnstange eines mechanischen Lenkgetriebes umfassen. Das Lenksystem ist vorzugsweise ein SbW-System, dies ist aber nicht zwingend.

Mit einem voll funktionsfähigen Positionssensor kann eine Absolutposition des beweglichen Elements des Radaktuators erfasst werden.

Die Einrichtung zur Bereitstellung der Stellgröße für den Radaktuator kann eine Regeleinrichtung sein, die die Stellgröße in Abhängigkeit einer Regeldifferenz bereitstellt. Sie kann aber auch eine Steuereinrichtung sein, die die Stellgröße in Abhängigkeit einer Führungsgröße bereitstellt.

Das Lenksystem ist vorzugsweise ein Lenksystem mit einem achsparallelen Antrieb (APA-Lenksystem). Dieses kann ein Kugelspindelgetriebe mit einem Riemen umfassen, über welches ein Elektromotor mit einem Spindelabschnitt einer Zahnstange bzw. einer Spur- oder Schubstange gekoppelt ist. Allerdings kann das Lenksystem auch in anderer Form ausgebildet sein, z.B. als Zahnstangenlenksystem, insbesondere als so genanntes Single- oder Dual-Pinion-Lenksysteme. Das Lenksystem kann auch als RCEPS (Rack Concentric Electric Power Steering)-System ausgebildet sein.

Erfindungsgemäß umfasst das Verfahren folgende Schritte:
In einem Prüfschritt wird geprüft, ob durch den Positionssensor eine Absolutposition mit vorbestimmter Genauigkeit erfasst werden kann. In diesem Prüfschritt wird also überprüft, ob die Information zur Absolutposition korrekt ist und insbesondere den Anforderungen einer Positionsregelung genügt. Die fehlende Genauigkeit kann beispielsweise detektiert werden, wenn eines oder mehrere der folgenden Kriterien erfüllt sind:
- der Positionssensor erzeugt ein Fehlersignal,
- eine Spannungsversorgung des Radaktuators bzw. seiner Positionssensorik ist ausgefallen,
- eine sprungartige Positionsänderung des beweglichen Elements wurde detektiert,
- die vom Positionssensor erfasste Absolutposition weicht um mehr als ein vorbestimmtes Maß von einer berechneten Position ab, wobei die berechnete Position in Abhängigkeit von fahrdynamischen Größen (z.B. einer Gierrate und/oder Querbeschleunigung) und/oder Kräften (z.B. Querkräften) im Lenksystem berechnet wird.

Bei APA-Lenksystemen, die einen Riemen zur Übertragung der vom Radaktuator erzeugten Kraft auf ein lenkbares Rad umfassen, kann die fehlende Zuverlässigkeit z.B. dann detektiert werden, wenn ein Riemensprung detektiert wird. Dieser kann beispielsweise detektiert werden, wenn die vorhergehend erwähnte sprungartige Positionsänderung detektiert wurde. Auch kann eine Lenkbewegungsgröße und/oder eine im Lenksystem wirkende Kraft erfasst oder rechnerisch bestimmt werden, wobei ein Riemensprung in Abhängigkeit dieser erfassten/bestimmten Größen, insbesondere in Abhängigkeit von deren zeitlichen Verlauf, detektiert wird.

Es ist möglich, dass im Falle eines erfüllten Kriteriums zusätzlich eine Plausibilisierung erfolgt und nur dann die fehlende Genauigkeit detektiert wird, wenn andere Ursachen für die Erfüllung des Kriteriums ausgeschlossen sind. Z.B. kann bei Detektion einer sprungartigen Positionsänderung in Abhängigkeit von fahrdynamischen Größen (z.B. einer Gierrate und/oder Querbeschleunigung) und/oder Kräften (z.B. Querkräften) im Lenksystem überprüft werden, ob die sprungartige Positionsänderung durch diese und somit keinen Sensorfehler bedingt ist. Ist aber z.B. bei der Detektion der sprungartigen Positionsänderung keine Änderung einer der genannten fahrdynamischen Größen oder eine Änderung, die kleiner als ein vorbestimmtes Maß ist, detektierbar, so kann von einem Sensorfehler ausgegangen werden, wobei dieser z.B. durch einen Riemensprung bedingt sein kann.

In einem Aktivierungsschritt wird zumindest ein Notlaufbetriebsmodus aus einer Menge von Notlaufbetriebsmodi aktiviert, wenn die Absolutposition nicht ausreichend genau erfasst werden kann, wenn also die fehlende Genauigkeit detektiert wurde. Beim Aktivieren kann insbesondere der bis zur Aktivierung verwendete Betriebsmodus, z.B. ein Normalbetriebsmodus, deaktiviert werden.

Die Menge von Notlaufbetriebsmodi umfasst einen Relativpositionsmodus, in dem die Stellgröße in Abhängigkeit einer Soll-Positionsänderung bestimmt wird, einen Gierbewegungsmodus, in dem die Stellgröße in Abhängigkeit einer Soll-Gierbewegung bestimmt wird, und einen Kraftmodus, in dem die Stellgröße in Abhängigkeit einer Soll-Kraft bestimmt wird.

Die Soll-Positionsänderung, die Soll-Gierbewegung und die Soll-Kraft können Führungsgrößen für eine Regelung bilden, wobei eine Regeleinrichtung die Stellgröße in Abhängigkeit einer Regelabweichung bestimmt, die wiederum als Differenz der Führungsgröße und einer Ist-Größe, die z.B. durch Messung bestimm wird, berechnet wird. Alternativ können die Soll-Positionsänderung, die Soll-Gierbewegung und die Soll-Kraft Führungsgrößen für eine Steuerung bilden, wobei eine Steuereinrichtung die Stellgröße in Abhängigkeit der Führungsgröße bestimmt. Vorzugsweise bilden die Soll-Positionsänderung und die Soll-Gierbewegung eine Führungsgröße für eine Regelung, während die Soll-Kraft die Führungsgröße für eine Steuerung bildet.

Im Relativpositionsmodus kann auch eine Soll-Geschwindigkeit des beweglichen Elements eine Führungsgröße bilden, wobei diese in Abhängigkeit der Soll-Positionsänderung bestimmt werden kann.

Die erläuterte Führungsgröße kann in Abhängigkeit eines Lenkwunschs bestimmt werden. Der Lenkwunsch kann in bekannter Weise in Abhängigkeit eines Handlenkmoments, also dem auf eine Lenkhandhabe ausgeübten Moment, oder einer Handlenkmomentänderung, welche/s z.B. sensorisch erfasst werden kann, bestimmt werden. Auch kann der Lenkwunsch in Abhängigkeit eines Lenkradwinkels, also des Winkels, der um eine Lenkhandhabe in Bezug auf eine Neutralstellung verdreht ist, oder einer Lenkradwinkeländerung, welche/r ebenfalls sensorisch erfasst werden kann, bestimmt werden. Insbesondere kann zur Erfassung/Bestimmung auch eine Sensorik eines Feedbackaktuators genutzt werden.

Wird detektiert, dass die Absolutposition nicht mit ausreichender Genauigkeit erfasst werden kann, kann genau einer der erläuterten Notlaufbetriebsmodi aktiviert werden. Vorzugsweise wird jedoch für mindestens einen Notlaufbetriebsmodus ein notlaufbetriebsmodus-spezifisches Aktivierungskriterium geprüft, wobei der entsprechende Notlaufsbetriebsmodus nur dann aktivierbar ist, wenn das Aktivierungskriterium erfüllt ist.

So kann beispielsweise der Relativpositionsmodus aktiviert werden, wenn der Positionssensor eine Positionsänderung mit ausreichender Genauigkeit erfassen kann. Z.B. kann im Fall eines Riemensprungs oder eines anderen ähnlichen Fehlers die Absolutposition nicht mehr mit ausreichender Genauigkeit erfasst werden, während jedoch die Positionsänderungen noch mit ausreichender Genauigkeit erfasst werden können. So kann also bei der Aktivierung des oder im Notlaufbetriebsmodus geprüft wird, ob durch den Positionssensor eine Positionsänderung mit ausreichender Genauigkeit erfasst werden kann, wobei der Relativpositionsmodus aktiviert werden kann, wenn der Positionssensor die Positionsänderung mit ausreichender Genauigkeit erfassen kann. Der Relativpositionsmodus ermöglicht in vorteilhafter Weise einen sicheren Betrieb eines Fahrzeugs, insbesondere derart, dass das Fahrzeug zumindest noch abgestellt werden kann. Da Eigenschaften der Positionsregelung im Wesentlichen erhalten bleiben, ergibt einerseits eine möglichst gute Erfüllung eines Lenkwunsches, aber auch ein für einen Fahrzeugführer akzeptables Lenkgefühl.

Auch kann bei der Aktivierung des oder im Notlaufbetriebsmodus geprüft werden, ob eine Soll-Gierbewegung mit einer vorbestimmten Genauigkeit bestimmt werden kann, wobei der Gierbewegungsmodus aktiviert werden kann, wenn die Gierbewegung mit ausreichender Genauigkeit bestimmt werden kann. Der Gierbewegungsmodus ermöglicht in vorteilhafter Weise ebenfalls einen sicheren Betrieb eines Fahrzeugs, insbesondere derart, dass das Fahrzeug zumindest noch abgestellt werden kann. Über die Gierbewegung kann in vorteilhafter Weise auch ein Lenkwunsch möglichst gut abgebildet werden.

Es ist möglich, dass bei der Aktivierung des oder im Notlaubetriebsmodus die notlaufbetriebsmodusspezifischen Aktivierungskriterien in einer vorbestimmten Reihenfolge geprüft werden, wobei die Prüfung abgebrochen wird, sobald eines der Kriterien erfüllt ist. Dann kann der entsprechende Notlaufbetriebsmodus aktiviert werden. So kann gemäß der Reihenfolge z.B. zuerst ein relativpositionsmodusspezifisches Aktivierungskriterium und dann ein gierbewegungsmodusspezifisches Aktivierungskriterium geprüft werden. Für den Kraftmodus muss nicht zwingend ein Aktivierungskriterium geprüft werden, dieser kann aktiviert werden, wenn das letzte notlaufbetriebsmodusspezifische Aktivierungskriterium der Reihenfolge, z.B. das gierbewegungsmodusspezifische Aktivierungskriterium, nicht erfüllt ist. Der Kraftmodus ermöglicht in vorteilhafter Weise ebenfalls einen sicheren Betrieb eines Fahrzeugs, insbesondere derart, dass das Fahrzeug zumindest noch abgestellt werden kann. Aufgrund der Berücksichtigung der Kraft ergibt sich in vorteilhafter Weise auch eine möglichst gute Abbildung des Lenkwunsches.

Mit anderen Worten können dem Relativpositionsmodus und dem Gierbewegungsmodus jeweils Aktivierungskriterien zugeordnet sein, wobei dem Kraftmodus kein Aktivierungskriterium zugeordnet ist.

Wird detektiert, dass die Absolutposition nicht mit ausreichender Genauigkeit erfasst werden kann, kann auch ein entsprechendes Informationssignal erzeugt und an ein übergeordnetes System, insbesondere ein Fahrerassistenzsysteme, im Fahrzeug übermittelt werden. Dann kann eine Rückmeldung an den Fahrer erfolgen, z.B. über eine Warnlampe oder Ähnliches.

Das vorgeschlagene Verfahren ermöglicht insgesamt eine erhöhte Betriebssicherheit des Lenksystems, insbesondere bei einer Beeinträchtigung der Erfassung der Absolutposition, wobei jedoch auch bei einer solchen Beeinträchtigung ein Lenkwunsch möglichst gut umgesetzt wird.

In einer weiteren Ausführungsform wird ein Normalbetriebsmodus aktiviert oder fortgesetzt, wenn die Absolutposition ausreichend genau erfassbar ist bzw. erfasst werden kann. Im Normalbetriebsmodus kann die vorhergehend erläuterte Positionsregelung erfolgen, bei der die sensorisch erfasste Information über die Absolutposition verwendet wird. Die Soll-Position kann insbesondere in Abhängigkeit des Lenkwunsches bestimmt werden, der wie vorhergehend erläutert bestimmt werden kann. Der Lenkwunsch kann insbesondere mit Hilfe des Feedbackaktuators ermittelt werden, insbesondere in Abhängigkeit von Ausgangssignalen des Feedbackaktuators, die dieser bei Erzeugung eines Handlenkmoments oder einer Handlenkmomentänderung oder beim Einstellen eines Lenkradwinkels oder bei einer Lenkradwinkeländerung erzeugt. Die Information über die Soll-Position kann z.B. ein umgerechneter Ist-Lenkradwinkel sein. Sie kann über ein oder mehrere geeignete Bussysteme an die Regeleinrichtung übertragen werden. Wird der Lenkwunsch von einem Fahrerassistenzsystem bestimmt, so kann dieses insbesondere ein Assistenzsystem sein, welches ein assistiertes, teilautomatisiertes, bedingt automatisiertes, hoch automatisiertes oder vollautomatisiertes Fahren des Fahrzeugs mit dem Lenksystem ermöglicht. Voraussetzung für den Normalbetriebsmodus ist, dass die Informationen über eine Absolutposition mit vorbestimmter Genauigkeit bekannt sind.

Ist der Normalbetriebsmodus nicht aktiviert, z.B. weil ein Notbetriebsmodus aktiviert ist, so kann wiederholt, insbesondere periodisch, geprüft werden, ob durch den Positionssensor die Absolutposition (wieder) mit vorbestimmter Genauigkeit erfasst werden kann. Ist dies der Fall, kann (erneut) der Normalbetriebsmodus aktiviert werden. Z.B. ist es möglich, dass bei einem Verlust der Information über die Absolutposition, z.B. aufgrund des vorhergehend erläuterten Riemensprungs, diese neu angelernt wird. Z.B. kann detektiert werden, wenn sich das bewegliche Element des Radaktuators oder ein damit verbundenes weiteres Teil des Lenksystems in einer Referenzposition befindet, der eine (vorbekannte und z.B. abgespeicherte) absolute Position zugeordnet ist. Solch eine Referenzposition kann eine Position in einem Endanschlag sein. Diese können bei Verlust der Absolutpositionsinformation angefahren werden. Auch kann ein Signalgeber vorhanden sein, der beim Erreichen einer Referenzposition ein entsprechendes Signal erzeugt und dann das Befinden in der Referenzposition detektiert werden kann.

Neben dem oben genannten Fall des Riemensprungs ist diese Ausgestaltung insbesondere auch für den vorhergehend beschriebenen Verlust der Spannungsversorgung von Interesse, da ohne Spannungsversorgung nicht sichergestellt werden kann, dass die Räder (bzw. die verbindende Schubstange) nicht unbemerkt bewegt wurden. In einer erfindungsgemäßen Ausgestaltung kann dann bei einem Spannungsverlust ebenfalls ein entsprechender Notbetrieb durchgeführt werden, bis die Absolutposition wieder abgeglichen ist.

Hierdurch erhöht sich in vorteilhafter Weise die Betriebssicherheit noch weiter, da unter Umständen wieder der Normalbetriebsmodus aktiviert werden kann und nicht zwingend dauerhaft bzw. bis zu einer Reparatur im Notlaufbetriebsmodus verblieben werden muss.

In einer weiteren Ausführungsform wird bei der Aktivierung des oder im Notlaufbetriebsmodus geprüft, ob mindestens ein notlaufbetriebsmodusspezifisches Aktivierungskriterium erfüllt ist, wobei nur solche Notlaufbetriebsmodi aktivierbar sind, deren Aktivierungskriterium erfüllt sind. Dies und entsprechende Vorteile wurden vorhergehend bereits erläutert. Insbesondere ergibt sich in vorteilhafter Weise eine weitere Erhöhung der Betriebssicherheit, da ein Notbetriebsmodus nur dann aktiviert werden kann, wenn die hierzu erforderlichen Voraussetzung für eine zuverlässige Erfüllung eines Lenkwunschs erfüllt sind.

In einer weiteren Ausführungsform werden notlaufbetriebsmodusspezifische Aktivierungskriterien gemäß einer vorbestimmten Reihenfolge geprüft, wobei der Notlaufbetriebsmodus aktiviert wird, dessen Aktivierungskriterium zuerst erfüllt ist. Dies und entsprechende Vorteile wurden vorhergehend bereits erläutert.

In einer weiteren Ausführungsform wird die Stellgröße im Relativbewegungsmodus in Abhängigkeit einer Lenkradwinkeländerung bestimmt oder von einem Fahrerassistenzsystem vorgegeben. Dies wurde vorhergehend in Bezug auf den Normalbetriebsmodus bereits erläutert. Voraussetzung für den Relativbewegungsmodus ist, dass die Informationen über eine Positionsveränderung mit vorbestimmter Genauigkeit bekannt sind. Im Relativbewegungsmodus können softwaretechnisch realisierte Begrenzungen eines Stellbereichs des Radaktuators sowie gegebenenfalls des Feedbackaktuators, die einen Lenkwinkel- oder Radlenkwinkelbereich begrenzen, aufgehoben werden.

In einer weiteren Ausführungsform wird die Stellgröße im Gierbewegungsmodus in Abhängigkeit einer Soll-Gierrate bestimmt. Die Soll-Gierrate kann in Abhängigkeit eines Lenkwunsches bestimmt werden oder von einem Fahrerassistenzsystem vorgegeben werden. Hierbei kann angenommen werden, dass ein Fahrzeugführer durch Betätigung der Lenkhandhabe letztlich eine Gierbewegung (Drehung des Fahrzeuges um seine Hochachse) erreicht und so eine gewünschte Trajektorie entlangfahren möchte. Gleiches gilt für die Fahrerassistenzsysteme. Auch für sie ist die Änderung des Radlenkwinkels über die Vorgabe an den Radaktuator nur Mittel zum Zweck. Auch hier soll eine bestimmte Bewegung (in der Regel Gieren) des Fahrzeugs erreicht werden. Anstatt einer Vorgabe für die Soll-Position bekommt der Radaktuator bei diesem Modus eine Vorgabe für die Gierbewegung. Für die Bestimmung der Soll-Gierbewegung kann das Fahrassistenzsystem aus einer ermittelten Soll-Bahn (Soll-Trajektorie) des Fahrzeugs die Soll-Gierbewegung bestimmen, insbesondere modellbasiert oder über eine vorbestimmte Zuordnung. Bei manueller Betätigung kann die Soll-Gierbewegung aus eingestellten Ist-Lenkradwinkel bestimmt werden, z.B. ebenfalls modellbasiert oder über eine vorbestimmte Zuordnung. Es ist auch möglich, dass ein Lenkwunsch wie im Normalbetriebsmodus bestimmt wird und dann daraus die Soll-Gierbewegung bestimmt wird, insbesondere modellbasiert oder über eine vorbestimmte Zuordnung. Die Bestimmung kann durch ein Steuergerät im Fahrzeug erfolgen, insbesondere ein Steuergerät des Radaktuators.

Auch kann die Bestimmung der Soll-Gierbewegung adaptiv sein. So kann insbesondere im Normalbetriebsmodus eine Soll-Trajektorie, ein Ist-Lenkradwinkel oder ein Lenkwunsch sowie die sich einstellende Ist-Gierbewegung als Soll-Gierbewegung bestimmt werden, die der jeweils bestimmten Größe zugeordnet ist. Auch kann bei der Bestimmung der Soll-Gierbewegung die Fahrzeuggeschwindigkeit berücksichtigt werden. Diese Zuordnung kann dann wie vorhergehend erläutert genutzt werden. Zudem kann die Zuordnung in jedem Normalbetriebsmodus aktualisiert werden.

Hierdurch ergibt sich in vorteilhafter Weise eine zuverlässige und ausreichend genaue Bestimmung der Soll-Gierbewegung und somit eine gute Umsetzung eines Lenkwunschs im Gierbewegungsmodus.

In einer weiteren Ausführungsform wird die Stellgröße im Gierbewegungsmodus zusätzlich in Abhängigkeit einer Ist-Gierrate bestimmt. Für die Bestimmung einer Ist-Gierbewegung kann ein im Fahrzeug (oder alternativ im Radaktuator) verbauter Giersensor verwendet werden. Auch kann die Ist-Gierbewegung in Abhängigkeit von Einzelraddrehzahlen bestimmt werden, insbesondere wenn eine Fahrzeuggeschwindigkeit kleiner als ein vorbestimmter Schwellwert von z.B. 15 km/h ist und/oder eine Krümmung der aktuell abgefahrenen Trajektorie größer als ein vorbestimmter Schwellwert ist. Die Ist-Gierbewegung kann dann im Rahmen einer Regelung verwendet werden.

Hierdurch ergibt sich in vorteilhafter Weise eine weitere Verbesserung bei der Umsetzung des Lenkwunschs im Gierbewegungsmodus.

In einer weiteren Ausführungsform wird die Stellgröße im Kraftmodus in Abhängigkeit eines Handlenkmoments bestimmt oder von einem Fahrerassistenzsystem vorgegeben. Das Handlenkmoment kann insbesondere mit einem Drehmomentsensor erfasst werden. Alternativ kann das Handlenkmoment in Abhängigkeit einer Bewegung eines beweglichen Elements bzw. angetriebenen Elements des Feedbackaktuators und eines vom Feedbackaktuator erzeugten Moments bestimmt werden, insbesondere modellbasiert oder über eine vorbestimmte Zuordnung. Auch kann das Handlenkmoment aus einer Winkeldifferenz zwischen einem Ist-Lenkradwinkel, der z.B. mit einem entsprechenden Winkelsensor erfasst werden kann, und einer Ist-Winkelposition des beweglichen Elements des Feedbackaktuators, der z.B. ebenfalls mit einem entsprechenden Winkelsensor wie einem Motorlagesensor erfasst werden kann, sowie einer vorbekannten Steifigkeit der mechanischen Verbindung zwischen Lenkhandhabe und dem beweglichen Element des Feedbackaktuators bestimmt werden.

Das ermittelte Drehmoment kann modellbasiert oder über eine vorbestimmte Zuordnung, z.B. in Form einer Kennlinie, in eine Soll-Kraft für den Radaktuator umgerechnet werden, der diese Kraft dann als Aktorgröße einstellen kann. Diese Umrechnung kann durch ein Steuergerät des Feedbackaktuators oder des Radaktuators erfolgen, wobei dort jeweils eine entsprechende Kennlinie abgelegt sein kann.

Alternativ kann ein Fahrerassistenzsystem aus einer Abweichung der erfassten Ist-Bahn des Fahrzeugs von einer Soll-Bahn eine Soll-Kraft bestimmen und dann für den Betrieb des Radaktuators vorgeben. Hierbei kann insbesondere die Richtung der Soll-Kraft von Bedeutung sein, die durch ein entsprechendes Vorzeichen repräsentiert werden kann.

Alternativ kann im Kraftmodus ein Lenkwunsch in Form einer Soll-Position entsprechend der Bestimmung im Normalbetriebsmodus bestimmt werden. Dann kann diese modellbasiert, insbesondere mittels hinterlegter und vorzugsweise fahrzeuggeschwindigkeitsabhängiger Kennlinien oder einem entsprechendem Fahrzeugmodell, in eine Soll-Kraft umgerechnet werden. In einer speziellen Ausgestaltung bilden diese Kennlinien die Kräfte ab, die für konstante Kreisfahrten mit jeweils verschiedenen Krümmungsradien erforderlich sind, wobei diesen Kreisfahrten jeweils verschiedene Soll-Positionen zugeordnet sind. Auch können die Kennlinien (oder das Modell) während der Fahrt, insbesondere im Normalbetriebsmodus, angelernt werden. So kann insbesondere im Normalbetriebsmodus eine Soll-Position sowie die für die Einstellung erforderliche Kraft bestimmt werden, die dann der jeweils bestimmten Soll-Position zugeordnet wird. Diese Zuordnung kann fahrzeuggeschwindigkeitsabhängig bestimmt und dann wie vorhergehend erläutert genutzt werden. Zudem kann die Zuordnung in jedem Normalbetriebsmodus aktualisiert werden.

Weiter können ausgewählte und aus konventionellen Lenkungen bekannte Lenkfunktionen durch eine entsprechende Ansteuerung des Radaktuators im Normalbetriebsmodus oder in einem Notlaufbetriebsmodus bereitgestellt werden, insbesondere eine Schutzfunktion zur Vermeidung eines schnellen Einschlagens in den Endanschlag.

In einer weiteren Ausführungsform wird in einem Notlaufbetriebsmodus die Stellgröße durch eine Steuereinrichtung oder eine Regeleinrichtung bereitgestellt. Dies wurde vorgehend bereits erläutert. Hierbei ermöglicht eine Steuereinrichtung eine einfach implementierbare Bereitstellung der Stellgröße, wobei die Regelung eine im Vergleich verbesserte Umsetzung des Lenkwunsches ermöglicht.

Weiter vorgeschlagen wird ein Lenksystem in einem Fahrzeug, wobei das Lenksystem zumindest einen Radaktuator zur Erzeugung einer Antriebskraft für eine Lenkbewegung, einen Positionssensor zum Erfassen einer Absolutposition eines beweglichen Elements des Radaktuators sowie eine Einrichtung zur Bereitstellung einer Stellgröße für den Radaktuator umfasst. Erfindungsgemäß ist das Lenksystem konfiguriert, ein Verfahren gemäß einer der in dieser Offenbarung beschriebenen Ausführungsform durchzuführen. Somit ergeben sich die vorhergehend erläuterten Vorteile.

Weiter beschrieben wird, dass ein Fahrzeugführer über eine Aktivierung eines Notlaufbetriebsmodus informiert werden kann, z.B. durch Schalten einer Warnlampe.

Die Warnlampe kann hierbei entsprechend der üblichen Konventionen, d.h. z.B. in der EU, ausgestaltet sein. Ist z.B. eine Weiterfahrt in die nächste Werkstatt möglich, kann die Warnlampe gelb leuchten, ist keine Weiterfahrt mehr möglich und der Fahrer soll das Fahrzeug abstellen, so kann dies über eine rot leuchtende Warnlampe signalisiert werden.

Dient der Notlaufbetriebsmodus nur der zeitlichen Überbrückung, bis die Absolutposition wieder verfügbar ist, so kann auf eine Information des Fahrzeugführers, z.B. auf ein Aktivieren der Warnlampe, verzichtet werden. Ein Notlaufbetriebsmodus kann durch weitere akustische, visuelle und/oder haptische Hinweise unterstützt werden. Im Notlaufbetriebsmodus kann zudem die Fahrzeuggeschwindigkeit begrenzt werden.

Weiter beschrieben wird ein Fahrzeug mit einem Lenksystem gemäß einer der in dieser Offenbarung beschriebenen Ausführungsformen.

Die Erfindung wird anhand von Ausführungsbeispielen näher erläutert. Die Figuren zeigen:
- Fig. 1: eine schematische Ansicht eines erfindungsgemäßen Lenksystems und
- Fig. 2: ein schematisches Flussdiagramm eines erfindungsgemäßen Verfahrens.

Nachfolgend bezeichnen gleiche Bezugszeichen Elemente mit gleichen oder ähnlichen technischen Merkmalen.

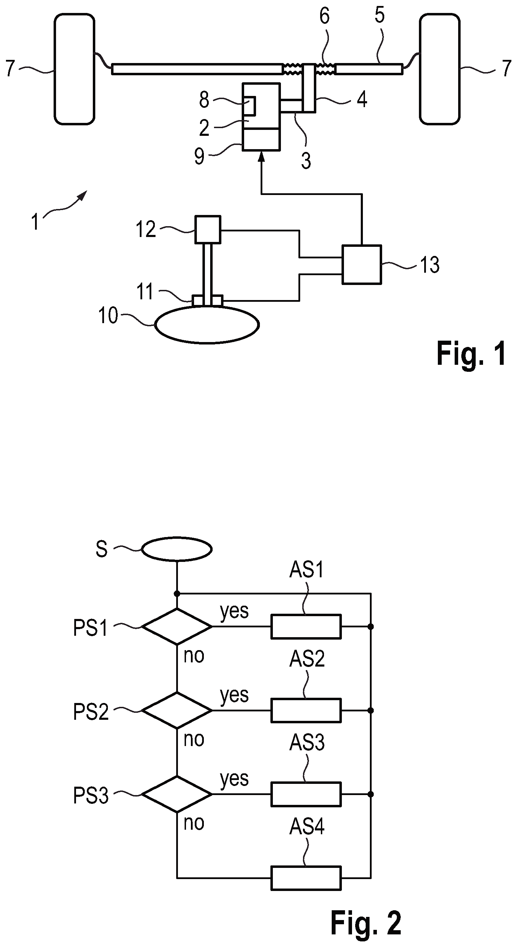

Fig. 1 zeigt eine schematische Ansicht eines erfindungsgemäßen Lenksystems 1 eines Fahrzeugs, welches als APA-Lenksystem ausgebildet ist. Das Lenksystem 1 umfasst einen Radaktuator 2, der als bewegliches Element 3 eine Antriebswelle antreibt. Das bewegliche Element 3 ist über ein Getriebe, welches einen Riemen 4 umfasst, mit einer Schubstange 5 gekoppelt, wobei die Schubstange 5 einen Spindelabschnitt 6 umfasst, der ebenfalls Teil des Getriebes ist. An freien Enden der Schubstange sind lenkbare Räder 7 befestigt.

Das Lenksystem 1, insbesondere der Radaktuator 2, umfasst einen Positionssensor 8 zur Erfassung einer Absolutposition des beweglichen Elements 3. Dieser kann in ein Gehäuse des Radaktuators 2 integriert sein. Ebenfalls umfasst das Lenksystem 1 ein Steuergerät 9 des Radaktuators 2, der eine Einrichtung zur Bereitstellung einer Stellgröße für den Radaktuator 2 bilden kann.

Weiter dargestellt sind eine als Lenkrad 10 ausgebildete Lenkhandhabe, ein Handlenkmomentsensor 11 und ein Feedbackaktuator 12, wobei der Feedbackaktuator 12 ein Feedbackmoment auf eine mit dem Lenkrad 10 verbundene Welle 12 ausüben kann, um einem Fahrzeugführer ein haptisches Feedback während einer Fahrzeugführung bereitzustellen. Diese Komponenten können ebenfalls Bestandteil des Lenksystems 1 sein.

Weiter dargestellt ist ein Fahrzeugsteuergerät 13, welches in einem Normalbetriebsmodus des Lenksystems 1 aus einem Lenkwunsch eine Soll-Position für das bewegliche Element 3 bestimmt und an das Steuergerät 9 übermittelt, welches dann aus der Soll-Position die Stellgröße bestimmt und an den Radaktuator 2 überträgt. Dieser erzeugt in Abhängigkeit der Stellgröße eine Aktorgröße, z.B. ein Drehmoment, um eine Winkelposition des beweglichen Elements 3 auf die Soll-Position einzustellen.

Der Lenkwunsch kann z.B. über den Handlenkmomentsensor 11 erfasst werden, insbesondere als ein Handlenkmoment oder eine Handlenkmomentänderung. Aus diesem/dieser kann dann die Soll-Position bestimmt werden. Alternativ könnte ein Lenkwunsch auch über einen Lenkradwinkelsensor erfasst werden, insbesondere als Lenkradwinkel oder Lenkradwinkeländerung.

In einem Notlaufbetriebsmodus kann mit dem Fahrzeugsteuergerät 13 aus dem Lenkwunsch eine Soll-Positionsänderung des beweglichen Elements 3, eine Soll-Gierbewegung des Fahrzeugs oder eine Soll-Kraft/ein Soll-Moment zum Antrieb einer Bewegung des beweglichen Elements 3 bzw. der Schubstange 5 bestimmt und an das Steuergerät 9 übertragen werden, welches dann daraus die Stellgröße für den Radaktuator 2 bereitstellt.

Alternativ kann in allen Betriebsmodi der Lenkwunsch auch von einem Fahrzeugassistenzsystem bestimmt werden, welches mit dem Fahrzeugsteuergerät 13 verbunden ist oder durch dieses betrieben wird, wobei dieser Lenkwunsch in analoger Weise dann in die betriebsmodusspezifische Soll-Größe umgerechnet werden kann.

Fig. 2 zeigt ein schematisches Flussdiagramm eines erfindungsgemäßen Verfahrens. Dargestellt ist ein Start S des Verfahrens, wobei in einem ersten Prüfschritt PS1 geprüft wird, ob durch einen Positionssensor 8 (siehe Fig. 1) eine Absolutposition des beweglichen Elements 3 mit vorbestimmter Genauigkeit erfasst werden kann. Ist dies der Fall, so wird in einem ersten Aktivierungsschritt AS1 ein Normalbetriebsmodus aktiviert bzw. bleibt dieser aktiviert. In diesem wird eine Soll-Position für das bewegliche Element 3 bestimmt und dem Steuergerät 9 zur Bereitstellung der Stellgröße übermittelt. Ist dies nicht der Fall, so wird in einem zweiten Prüfschritt PS2 geprüft, ob ein relativpositionsmodusspezifisches Aktivierungskriterium erfüllt ist. Insbesondere wird geprüft, ob der Positionssensor 8 eine Positionsänderung mit ausreichender Genauigkeit erfassen kann. Ist dies der Fall, so wird in einem zweiten Aktivierungsschritt AS2 ein Relativpositionsmodus als Notlaufbetriebsmodus aktiviert. In diesem wird in Abhängigkeit des Lenkwunsches eine Soll-Positionsänderung für das bewegliche Element 3 bestimmt und dann an das Steuergerät 9 zur Bereitstellung der entsprechenden Stellgröße übermittelt. Ist dies nicht der Fall, so wird in einem dritten Prüfschritt PS3 geprüft, ob eine Soll-Gierbewegung mit einer vorbestimmten Genauigkeit bestimmt werden kann. Ist dies der Fall, so wird in einem dritten Aktivierungsschritt AS3 ein Gierbewegungsmodus als Notlaufbetriebsmodus aktiviert. In diesem wird in Abhängigkeit des Lenkwunsches eine Soll-Gierbewegung bestimmt und dann an das Steuergerät 9 zur Bereitstellung der entsprechenden Stellgröße übermittelt. Ist dies nicht der Fall, so wird in einem vierten Aktivierungsschritt AS4 ein Kraftmodus als Notlaufbetriebsmodus aktiviert. In diesem wird in Abhängigkeit des Lenkwunsches eine Soll-Kraft für das bewegliche Element 3 bestimmt und dann an das Steuergerät 9 zur Bereitstellung der entsprechenden Stellgröße übermittelt. Die Abfolge von Prüfschritten PS1, PS2, PS3 kann wiederholt, insbesondere periodisch, durchlaufen werden. Selbstverständlich ist auch eine andere Abfolge der Schritte möglich. Insbesondere kann der dritte Prüfschritt PS3 vor dem zweiten Prüfschritt PS2 ausgeführt werden. Mit anderen Worten wird also, wenn eine Absolutposition des beweglichen Elements 3 nicht mit vorbestimmter Genauigkeit erfasst werden kann, zuerst geprüft, ob eine Soll-Gierbewegung mit einer vorbestimmten Genauigkeit bestimmt werden kann (entspricht dem Prüfschritt PS3) und, wenn ja, die Maßnahmen des dritten Aktivierungsschritts AS3 durchgeführt. Ist dies nicht der Fall, so wird geprüft, ob ein relativpositionsmodusspezifisches Aktivierungskriterium erfüllt (entspricht dem zweiten Prüfschritt) ist und, wenn ja, die Maßnahmen des zweiten Aktivierungsschritts AS2 durchgeführt. Ist dies nicht der Fall, so werden die Maßnahmen des vierten Aktivierungsschritts zur Aktivierung des Kraftmodus durchgeführt.

### Bezugszeichenliste

- 1: Lenksystem
- 2: Radaktuator
- 3: bewegliches Element
- 4: Riemen
- 5: Schubstange
- 6: Spindelabschnitt
- 7: lenkbare Räder
- 8: Positionssensor
- 9: Steuergerät
- 10: Lenkrad
- 11: Handlenkmomentsensor
- 12: Feedbackaktuator
- 13: Fahrzeugsteuergerät
- AS1: erster Aktivierungsschritt
- AS2: zweiter Aktivierungsschritt
- AS3: dritter Aktivierungsschritt
- AS4: vierter Aktivierungsschritt
- PS1: erster Prüfschritt
- PS2: zweiter Prüfschritt
- PS3: dritter Prüfschritt
- S: Start

## Patentansprüche

1. Verfahren zum Betrieb eines Lenksystems (1), wobei das Lenksystem (1) zumindest einen Radaktuator (2) zur Erzeugung einer Antriebskraft für eine Lenkbewegung, einen Positionssensor (8) zum Erfassen einer Absolutposition eines beweglichen Elements (3) des Radaktuators (2) sowie eine Einrichtung zur Bereitstellung einer Stellgröße für den Radaktuator (2) umfasst,
**dadurch gekennzeichnet, dass**
das Verfahren folgende Schritte umfasst:
a) Prüfen, ob durch den Positionssensor (8) eine Absolutposition mit vorbestimmter Genauigkeit erfasst werden kann,
b) Aktivieren eines Notlaufbetriebsmodus aus einer Menge von Notlaufbetriebsmodi, wenn die Absolutposition nicht ausreichend genau erfassbar ist, wobei die Menge von Notlaufbetriebsmodi einen Relativpositionsmodus, in dem die Stellgröße in Abhängigkeit einer Soll-Positionsänderung bestimmt wird, einen Gierbewegungsmodus, in dem die Stellgröße in Abhängigkeit einer Soll-Gierbewegung bestimmt wird, und einen Kraftmodus, in dem die Stellgröße in Abhängigkeit einer Soll-Kraft bestimmt wird, umfasst.

2. Verfahren nach Anspruch 1, **dadurch gekennzeichnet, dass** ein Normalbetriebsmodus aktiviert oder fortgesetzt wird, wenn die Absolutposition ausreichend genau erfassbar ist.

3. Verfahren nach Anspruch 1 oder 2, **dadurch gekennzeichnet, dass** bei der Aktivierung des oder im Notlaufbetriebsmodus geprüft wird, ob mindestens ein notlaufbetriebsmodusspezifisches Aktivierungskriterium erfüllt ist, wobei nur solche Notlaufbetriebsmodi aktivierbar sind, deren Aktivierungskriterium erfüllt sind.

4. Verfahren nach Anspruch 3, **dadurch gekennzeichnet, dass** die notlaufbetriebsmodusspezifischen Aktivierungskriterien gemäß einer vorbestimmten Reihenfolge geprüft werden, wobei der Notlaufbetriebsmodus aktiviert wird, dessen Aktivierungskriterium zuerst erfüllt ist.

5. Verfahren nach einem der vorangegangenen Ansprüche, **dadurch gekennzeichnet, dass** die Stellgröße im Relativbewegungsmodus in Abhängigkeit einer Lenkradwinkeländerung bestimmt oder von einem Fahrerassistenzsystem vorgegeben wird.

6. Verfahren nach einem der vorangegangenen Ansprüche, **dadurch gekennzeichnet, dass** die Stellgröße im Gierbewegungsmodus in Abhängigkeit einer Soll-Gierrate bestimmt wird, wobei die Soll-Gierrate in Abhängigkeit eines Lenkwunsches bestimmt oder von einem Fahrerassistenzsystem vorgegeben wird.

7. Verfahren nach Anspruch 6, **dadurch gekennzeichnet, dass** die Stellgröße im Gierbewegungsmodus zusätzlich in Abhängigkeit einer Ist-Gierrate bestimmt wird.

8. Verfahren nach einem der vorangegangenen Ansprüche, **dadurch gekennzeichnet, dass** die Stellgröße im Kraftmodus in Abhängigkeit eines Handlenkmoments bestimmt oder von einem Fahrerassistenzsystem vorgegeben.

9. Verfahren nach einem der vorangegangenen Ansprüche, **dadurch gekennzeichnet, dass** in einem Notlaufbetriebsmodus die Stellgröße durch eine Steuereinrichtung oder eine Regeleinrichtung bereitgestellt wird.

10. Lenksystem (1) in einem Fahrzeug, wobei das Lenksystem (1) zumindest einen Radaktuator (2) zur Erzeugung einer Antriebskraft für eine Lenkbewegung, einen Positionssensor (8) zum Erfassen einer Absolutposition eines beweglichen Elements (3) des Radaktuators (2) sowie eine Einrichtung zur Bereitstellung einer Stellgröße für den Radaktuator (2) umfasst,
**dadurch gekennzeichnet, dass**
das Lenksystem (1) konfiguriert ist, ein Verfahren gemäß einem der Ansprüche 1 bis 9 durchzuführen.
